# EUROPÄISCHE PATENTSCHRIFT

(11) **EP 0 951 816 B1**
(45) Veröffentlichungstag und Bekanntmachung des Hinweises auf die Patenterteilung: **05.03.2003**
(21) Anmeldenummer: 98107491.7
(22) Anmeldetag: 24.04.1998
(51) Int. Cl.: A01D 34/66, A01D 34/64

(54) **Grundstückspflegefahrzeug mit einem Arbeitsgerät**
Field care vehicle with a working implement
Vehicule pour le soin du terrain avec un outil de travail

(43) Veröffentlichungstag der Anmeldung: 27.10.1999
(73) Patentinhaber: Roberine BV, 7521 BE Enschede (NL)
(72) Erfinder: Eykelkamp, William J.H., 7161 AN Neede (NL)
(74) Vertreter: Magin, Ludwig Bernhard

(56) Entgegenhaltungen:
- EP-A- 0 182 229
- GB-A- 2 105 807
- US-A- 2 959 233
- US-A- 3 221 482
- US-A- 3 757 500
- US-A- 4 563 019
- US-A- 4 779 406
- US-A- 5 079 907
- US-A- 5 475 971
- US-A- 5 600 943

## Beschreibung

Die Erfindung betrifft ein Grundstückspflegefahrzeug mit einem Arbeitsgerät, insbesondere selbstfahrender Rasenmäher, wobei das Arbeitsgerät an einem Fahrzeugrahmen in der Fahrzeuglängs- oder Querrichtung beweglich getragen und von einer wenigstens teilweise innerhalb der Kontur des Grundstückspflegefahrzeugs gelegenen Arbeitsstellung in eine außerhalb der Kontur des Grundstückspflegefahrzeugs gelegene Stellung bringbar ist.

Fahrzeuge zur Garten- und Grundstückspflege weisen üblicherweise Anbaugeräte auf, die über Tragvorrichtungen an den Korpus des Fahrzeugs angeschlossen sind. Diese Anbaugeräte können beispielsweise als Mähgeräte wie Spindelmäher und Sichelmäher oder aber auch als Vertikutierer, Kehreinrichtungen oder ähnliches ausgebildet sein. Die Anbaugeräte sind über die Tragvorrichtungen höhenverstellbar an dem Fahrzeugkorpus angebracht, so daß sie aus einer Arbeitsstellung, in der sie mit dem Boden Kontakt haben, in eine ausgehobene Transport- oder Wartungsstellung gebracht werden können.

Die EP-A1-0 217 773 zeigt einen Aufsitzmäher, der ein Chassis aufweist, das eine Antriebseinrichtung trägt, die sowohl Räder als auch eine Schneideinrichtung, die lösbar am Chassis befestigt ist, antreibt. Die Schneideinrichtung kann aus einer unteren Schneidposition in eine obere Nicht-Schneidposition gebracht werden. Die Verstellung erfolgt mittels einer Hebelanordnung über die sowohl ein Einstellen der Schnitthöhe als auch ein komplettes Ausheben der Schneideinrichtung ermöglicht wird. Die Schneideinrichtung verbleibt in jeder der genannten Positionen unter dem Fahrzeug, so daß die Schneideinrichtung zu Wartungszwecken demontiert werden muß, da sie ansonsten nicht zugänglich ist.

Aus der US-A-5,079,907 geht ein Aufsitzmäher hervor, der eine Grasschneideeinrichtung und ein Messergehäuse aufweist, die zwischen einer im wesentlichen horizontalen Mähstellung und einer hochgeklappten Wartungsstellung bewegt werden können. Das Messergehäuse ist an einem Verstellmechanismus aufgehängt, der einenends mit dem Messergehäuse und anderenends mit einem Fahrzeugkorpus verbunden ist. Das Messergehäuse wird in seiner angehobenen Stellung über den Verstellmechanismus nach hinten gekippt, um die Messer im Gehäuse zugänglich zu machen. Eine solche Ausführung ist nur möglich, wenn die Schneideeinrichtung frei bewegt werden kann und folglich nicht ganz oder auch nur teilweise unter dem Fahrzeug angeordnet ist.

Die US-A-5,042,236 offenbart einen Golfrasenmäher mit insgesamt fünf Spindelmäheinheiten, von denen drei vor dem Golfrasenmäher und zwei seitlich dazu versetzt unter dessen Rahmen angebracht sind. Mit dieser Anordnung soll erreicht werden, daß zwischen den vorderen Spindelmäheinheiten verbleibende Streifen von den nachfolgenden Spindelmäheinheiten gemäht werden, so daß sich ein gleichmäßiges Rasenbild ergibt. Während die vorderen Spindelmäheinheiten für Servicezwecke frei liegen, ist der Zugang zu den rückwärtigen Spindelmäheinheit sehr eingeengt.

Schließlich lehrt die EP-B1-0 182 229 einen Ackerschlepper mit einer sogenannten Front-Hitch, die an dem Rahmen des Ackerschleppers horizontal beweglich gelagert ist. Diese Front-Hitch ist dazu bestimmt, z. B. ein Mähwerk, ein Bodenbearbeitungsgerät oder dergleichen aufzunehmen. Die horizontale Verschiebbarkeit macht es möglich, die herrschenden Hebelverhältnisse so zu ändern, daß die Vorderräder stärker belastet werden und somit mehr Zugkraft entwickeln. Allerdings befindet sich weder die Front-Hitch noch das von ihr getragene Arbeitsgerät unterhalb des Ackerschleppers oder ist sonstwie verdeckt angeordnet.

Das der Erfindung zugrunde liegende Problem wird in der schlechten Zugänglichkeit der Arbeitsgeräte an bekannten Fahrzeugen zur Garten- und Grundstückspflege gesehen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann das Arbeitsgerät mit seiner oder seinen sich z. B. unterhalb einer Bedienungsplattform oder unterhalb des Fahrzeugrahmens befindlichen Geräteeinheit(en) nach außen, d. h über die Kontur des Grundstückspflegefahrzeugs hinaus, verlagert werden, wo eine Bedienungsperson ausreichend Zugang erlangt. Bei der Geräteeinheit kann es sich um ein Mähgerät, wie einen Spindel- oder Sichelmäher, um ein Kehrgerät, um ein Räumschild, einen Vertikutierer, einen Bodenbelüfter, einen Düngerstreuer und dergleichen mehr handeln. Je nach der Lage des Arbeitsgeräts kann es sinnvoll sein, dieses nach vorne, nach hinten oder zur Seite von der Fahrzeugmitte wegzubewegen, um Zugang zu verschaffen. Die Verwendung eines oder mehrerer Holme, die in, an oder auf einer Schiene des Fahrzeugrahmens verschieblich aufgenommen werden, stellt eine robuste und gleichzeitig einfache und kostengünstige Lagerung des Arbeitsgeräts dar. Eine lange Führung, z. B. teleskopischer Art, verhindert zudem, daß es zu einer Verkantung während der Bewegung kommt.

Ein besonderer Vorteil wird durch die Verwendung einer geneigten Führung des Arbeitsgeräts an dem Fahrzeugrahmen erreicht, weil dann das Arbeitsgerät nicht nur aus dem Deckungsbereich des Grundstückspflegefahrzeugs, z. B. unter einem Schutz, dem Fahrzeugrahmen, einer Bedienungsplattform oder dergl. herausbewegt, sondern auch noch zusätzlich angehoben wird, was die Servicefreundlichkeit noch mehr erhöht.

Wenn mehrere versetzte Geräteeinheiten vorhanden sind, kann z. B. eine mittlere zu dem Grundstückspflegefahrzeug hin versetzt zwischen benachbarten Geräteeinheiten vorgesehen werden und z. B. den Raum zwischen zwei Tragrädern einnehmen. Auf diese Weise baut das Grundstückspflegefahrzeug relativ kurz und wird somit verkehrssicherer und übersichtlicher.

Zwar erfaßt die Erfindung auch die Verstellung des Geräterahmens von Hand, mit einer mechanischen Winde, oder dergleichen; bei schweren Arbeitsgeräten ist es aber sehr hilfreich, die Verstellung mittels eines Motors vorzunehmen, der vorzugsweise fernbetätigbar ist.

Eine sichere Führung auch gegen Seitenkräfte ergibt sich, wenn der Holm des Geräterahmens in einem geschlossenen Profil, nämlich einem Rohr, beweglich gelagert ist, wobei zum Anschluß des Motors ein oder mehrere entsprechende Längsschlitze vorgesehen werden können, wenn der Motor nicht konzentrisch in dem Holm oder der Schiene gelagert sein soll. Alternativ kann auch der Holm als Rohr und die Schiene als Träger ausgebildet sein, auf der das Rohr verschiebbar gelagert ist.

Die Bewegung zweier oder mehrerer Holme kann mittels nur eines einzigen Motors durchgeführt werden, wenn diese unter sich antriebsmäßig verbunden sind und so sichergestellt wird, daß sie sich im gleichen Maß bewegen und somit nicht verkanten. Zu diesem Zweck kann eine Welle mit Rädern, z. B. Reibräder, an den mehreren Holmen angreifen.

Eine absolut synchrone Bewegung wird dadurch erzielt, daß Zahnräder und Zahnstangen zur Antriebsübertragung verwendet werden, da es dann keinen Schlupf gibt.

Die Verwendung wenigstens eines Auflagers und wenigstens einer Stütze an dem Arbeitsgerät und dem Grundstückspflegefahrzeug macht es möglich, die Gewichtskräfte von der Führung fernzuhalten, wenn sich das Arbeitsgerät in seiner eingefahrenen Stellung befindet, was normalerweise der Fall ist. Auf diese Weise gehen Schläge aufgrund von Bodenunebenheiten nicht oder kaum in die Holme und Schienen ein.

Zur Vermeidung von Unfällen bei der Wartung des Arbeitsgeräts kann ein Sensor vorgesehen werden, der erkennt, wenn dieses aus seiner Betriebsstellung bewegt worden ist und dann vermutlich in seine Wartungsstellung gelangt. Dieser Sensor kann mittels einfacher elektrischer oder elektronischer Schaltelemente, oder mittels einer computergestützten Steuerung oder Regelung dermaßen mit Motoren zum Antrieb des Arbeitsgeräts und/oder zu dessen Ausheben und/oder zu dessen Schwenkbewegung verknüpft werden, daß letztere nicht aktiv werden können, sobald sich das Arbeitsgerät außerhalb seiner Arbeitsstellung befindet.

Nach einem weiteren Sicherheitsmerkmal kann eine mechanische und handbetätigte Sperrvorrichtung vorgesehen werden, die das Arbeitsgerät an dem Fahrzeugrahmen außerhalb seiner Arbeitsstellung sichert. In der einfachsten Form kann dies mittels eines Bolzens geschehen, der durch fluchtende Öffnungen in dem Arbeitsgerät und dem Fahrzeugrahmen gesteckt wird.

Wenn das Arbeitsgerät drei als Spindelmäher ausgebildete Geräteeinheiten aufweist, die sich überdeckend an dem Geräterahmen beweglich gehalten sind, und wobei äußere Geräteeinheiten in eine Außerbetriebsstellung vertikal schwenkbar sind, sind die äußeren Geräteeinheiten nicht nur besser zugänglich, weil sie eine senkrechte Lage einnehmen können, sondern die Wartung kann auch in einer schmalen Garage vorgenommen werden.

Mittels einer unteren und einer oberen Stützrolle zwischen dem Holm und der Schiene wird der Holm mit geringem Bewegungswiderstand geführt.

In der Zeichnung ist ein nachfolgend näher beschriebenes Ausführungsbeispiel der Erfindung dargestellt. Es zeigt:
- Fig. 1: ein Grundstückspflegefahrzeug mit einem Fahrzeugrahmen und einem Arbeitsgerät in teilweiser, schematischer Darstellung und in Draufsicht,
- Fig. 2: das Grundstückspflegefahrzeug aus Figur 1 in Seitenansicht, wobei sich das Arbeitsgerät in einer dem Grundstückspflegefahrzeug zugelegenen Stellung befindet,
- Fig. 3: das Grundstückspflegefahrzeug aus Figur 1 in Seitenansicht, wobei sich das Arbeitsgerät in einer dem Grundstückspflegefahrzeug abgelegenen Stellung befindet, und
- Fig. 4: den Fahrzeugrahmen mit einem Geräterahmen des Arbeitsgeräts in perspektivischer Ansicht und im Detail.

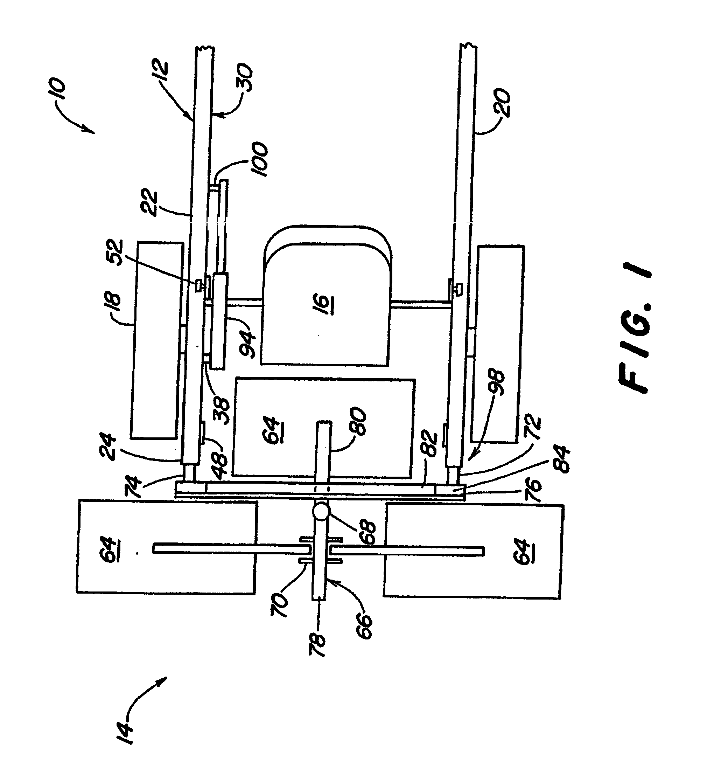

Ein in Figur 1 gezeigtes Grundstückspflegefahrzeug 10 ist mit einem Fahrzeugrahmen 12 und einem Arbeitsgerät 14 versehen und nur in einem Endbereich dargestellt.

Das Grundstückspflegefahrzeug 10 ist in dem bevorzugten Ausführungsbeispiel als ein Rasen- oder Golfplatzmäher dargestellt und beschrieben und selbstfahrend ausgebildet. Allerdings könnte das Grundstückspflegefahrzeug 10 auch als gezogenes Fahrzeug ausgebildet sein. Ein solches Grundstückspflegefahrzeug 10 ist in nicht gezeigter Weise mit einem Motor, einem Getriebe, einer Fahrplattform und dergleichen ausgerüstet und entspricht im wesentlichen den eingangs beschriebenen bekannten Fahrzeugen.

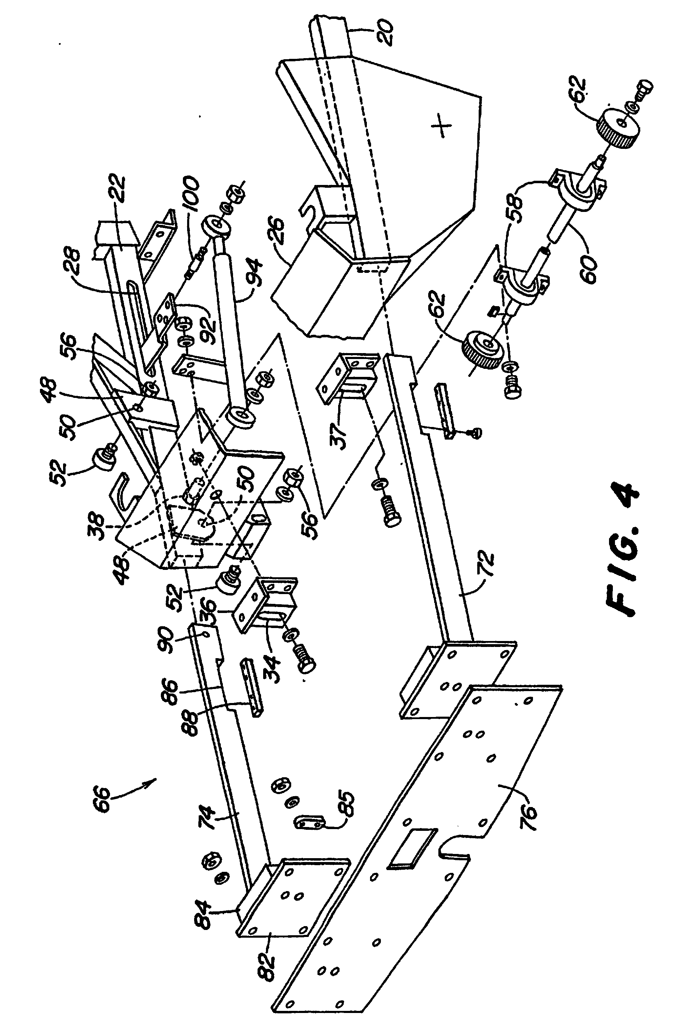

Der Fahrzeugrahmen 12 dient dazu, die wesentlichen Komponenten des Grundstückspflegefahrzeugs 10 zu tragen, von denen lediglich symbolisch ein Fahrersitz 16 dargestellt ist. Zur Abstützung auf dem Boden und zur Fortbewegung ist der Fahrzeugrahmen 12 auf Rädern 18 gelagert, von denen nur zwei vordere gezeigt sind, während rückwärtige lenkbare weggelassen worden sind. Von dem Fahrzeugrahmen 12 sind im wesentlichen eine linke und eine rechte Schiene 20, 22 von Interesse, die sich in der Bewegungsrichtung des Grundstückspflegefahrzeugs 10 erstrecken und in dem Ausführungsbeispiel als Rohr von quadratischem oder rechteckigem Querschnitt ausgebildet sind. Es wird darauf hingewiesen, daß sowohl eine einzige Schiene 20, 22 ausreichen würde, als auch mehr als zwei Schienen 20, 22 möglich wären. Außerdem ist es denkbar, die Schiene 20, 22 anstatt als Rohr als vollen Träger auszubilden. Wie es sich aus Figur 4 ergibt, sind die Schienen 20, 22 an ihrem frontseitigen Ende 24 über eine plattenförmige Traverse 26 miteinander zu einem "U" verbunden und bilden somit einen starren Rahmen. Die Verbindung mittels der Traverse 26 ist jedoch nicht zwingend.

Die Schienen 20, 22 sind spiegelbildlich zu der Längsmittenachse des Grundstückspflegefahrzeugs ausgebildet und so an dem Grundstückspflegefahrzeug 10 angeordnet, daß der Fahrzeugrahmen 12 zu dem Boden als der Aufstandsfläche des Grundstückspflegefahrzeugs 10 einen Winkel einschließt. Danach ist der Fahrzeugrahmen 12 im Bereich der Fahrzeugmitte dem Boden näher zugelegen als an dem Fahrzeugende. Wenn die Darstellung auch den Austritt des Fahrzeugrahmens 12 an dem vorderen Ende zeigt, so ist dies dennoch nicht zwingend; vielmehr kann der Fahrzeugrahmen 12 auch an dem rückwärtigen Ende oder seitlich auslaufen.

Die in Fahrtrichtung rechts gelegene Schiene 22 weist zwischen ihren offenen Enden einen Längsschlitz 28 auf, der sich mindestens über den Verstellweg des Arbeitsgeräts 14 und in der der anderen Schiene 20 zugelegenen Seitenfläche 30 erstreckt.

An der Unterseite jeder Schiene 20, 22 ist eine Öffnung 32 vorhanden, deren Zweck weiter unten erläutert wird.

An der Vorderseite der Traverse 26, d. h. auf der dem Arbeitsgerät 14 zugelegenen Seite, ist auf jeder Seite im Austrittsbereich jeder Schiene 20, 22 eine Stütze 34 angebracht, die formstabil ausgebildet ist und eine Auflagefläche 36 sowie eine als Langloch ausgebildete Öffnung 37 bietet.

Hinter der Traverse 26 ist an die Seitenfläche 30 ein Bolzen 38 angebracht, durch den die Längsmittenachse des Längsschlitzes 28 verläuft.

Jede Schiene 20, 22 ist sowohl im Bereich der Traverse 26 als auch ungefähr auf ihrer halben Länge mit einer vorderen und einer rückwärtigen Aussparung 42 versehen, von denen sich die erste in dem Boden 44 und die letzte in der Decke 46 der Schiene 20, 22 befindet. In den Bereich jeder Aussparung 40, 42 ist vorzugsweise an die Seitenfläche 30 eine Platte 48 angeschweißt oder angeschraubt, die eine Bohrung 50 enthält.

Jeder Platte 48 und jeder Aussparung 40, 42 ist eine Stützrolle 52 zugeordnet, die drehbar auf einem Bolzen 54 aufgenommen ist. Jeder Bolzen 54 wird durch eine entsprechende Bohrung 50 gesteckt und mit einer Mutter 56 gesichert. Die Stützrollen bzw. ihre Lage in bezug auf die Schienen 20, 22 sind so getroffen, daß sich ihre Umfangsflächen geringfügig über die Innenfläche der Schiene 20, 22 erstrecken.

Im Bereich der Öffnung 32 in dem Boden 44 jeder Schiene 20, 22 ist jeweils ein Lagerbock 58 an eine nicht gezeigte Verbindungsschiene, die die Schienen 20 und 22 miteinander verbindet, angeschraubt oder angeschweißt, die gemeinsam eine Welle 60 drehbar aufnehmen. Selbstverständlich können die Lagerböcke 58 auch an die Schienen 20, 22 direkt angebracht werden. Die Welle 60 ist endseitig mit je einem Rad 62 drehfest bestückt, das in dem bevorzugten Ausführungsbeispiel als ein Zahnrad ausgebildet ist. Folglich stehen auch beide Räder 62 in drehfester Verbindung zueinander. Der Abstand der Räder 62 auf der Welle 60 und die Anordnung der Welle 60 in Bezug auf die Schienen 20, 22 ist so gewählt, daß die Räder 62 durch die Öffnungen 32 in das Innere der jeweils zugelegenen Schiene 20, 22 ragen. Die Welle 60 erstreckt sich quer zu der Längsrichtung der Schienen 20, 22. Die Befestigung der Räder 62 auf der Welle 60 und der Lagerböcke 58 an den Schienen 20, 22 oder an einer anderen Stelle des Grundstückspflegefahrzeugs 10 oder Fahrzeugrahmens 12 erfolgt mittels nicht näher gekennzeichneter bekannter Bauelemente wie Keile und Schrauben.

Im übrigen sind an die Schienen 20, 22 nicht näher bezeichnete Halter, Konsolen und Bleche angebracht, die dem weiteren Aufbau des Grundstückspflegefahrzeugs 10 dienen und für die Erfindung nicht von Belang sind.

Das Arbeitsgerät 14 setzt sich in dem bevorzugten Ausführungsbeispiel aus mehreren Geräteeinheiten 64 und einem Geräterahmen 66 zusammen.

Die Geräteeinheiten 64 sind in dem gewählten Ausführungsbeispiel als hydraulisch angetriebene Spindelmäher bekannter Bauart ausgebildet. Insgesamt sind drei Geräteeinheiten 64 quer zur Fahrtrichtung nebeneinander angeordnet, wobei zwei äußere Geräteeinheiten 64 gegenüber einer mittleren Geräteeinheit 64 nach vorne, d. h. von dem Grundstückspflegefahrzeug 10 weg, versetzt angeordnet sind. Auf diese Weise ist es möglich, daß während des Betriebs die mittlere Geräteeinheit 64 in den Bereich zwischen den Rädern 18 eintritt, so daß das Arbeitsgerät 14 nicht weit nach vorne über das Grundstückspflegefahrzeug 10 hinausragt. In der Fahrtrichtung gesehen überlappen sich die äußeren und die mittlere Geräteeinheit 64, so daß beim Mähen keine Grasstreifen stehen bleiben. Alle Geräteeinheiten 64 weisen den gleichen Abstand zum Boden auf und können mittels einer Hubvorrichtung 68 in der Höhe verstellt werden, um eine andere Schnitthöhe oder eine Transportstellung einzunehmen. Im dem dargestellten Ausführungsbeispiel wird der Einfachheit halber von einer einzigen Hubvorrichtung 68 ausgegangen, die jedoch nur beispielhaft wiedergegeben ist. In der Praxis kann für jede Geräteeinheit eine eigene Hubvorrichtung vorgesehen werden, was ebenfalls unter dem Begriff Hubvorrichtung verstanden werden soll.

Schließlich sind die äußeren Geräteeinheiten 64 in nur symbolisch dargestellten Lagern 70 vertikal schwenkbar aufgehängt.

Die Ausbildung der Geräteeinheiten 64 als Spindelmäher steht nur beispielhaft für jegliche Art einer Geräteeinheit 64. Statt dessen können auch Kehrvorrichtungen, Sichelmäher, Vertikutierer, Aufsammler, Räumschilder und dergleichen verwendet werden.

Der Geräterahmen 66 setzt sich in dem vorliegenden Ausführungsbeispiel wenigstens aus einem linken und einem rechten Holm 72, 74 und einem Träger 76 zusammen. An diesen Träger 76 ist in dem gezeigten Ausführungsbeispiel ein vorderer Tragarm 78 und ein rückwärtiger Tragarm 80 in der Art einer eigenständigen Anbaukonsole angeschlossen, die als Träger aller Geräteeinheiten 64 dient.

Der Geräterahmen 66 hat im wesentlichen ein U-förmiges Aussehen, wobei sich der Boden des "U" quer zu und die Schenkel des "U" in der Fahrtrichtung erstrecken und in dieser gegenüber dem Fahrzeugrahmen 12 beweglich sind.

Der linke und der rechte Holm 72, 74 sind spiegelbildlich zu der Längsachse des Grundstückspflegefahrzeugs 10 ausgebildet und an ihren vorderen Enden mit Montageplatten 82 für die Verbindung mit dem Träger 76 versehen. Jede Montageplatte 82 ist auf ihrer Rückseite, d. h. auf der den Schienen 20, 22 zugelegenen Seite, mit einem Auflager 84 ausgerüstet, das so angeordnet ist, daß es sich bei eingefahrenem Geräterahmen 66 auf die jeweilige Stütze 34 aufsetzen kann. Auf der dem Fahrzeugrahmen 12 zugelegenen Seite des Auflagers 84 ist ein Zapfen 85 vorgesehen, der so an dem Auflager 84 angeordnet und ausgebildet ist, daß er bei eingefahrenem Arbeitsgerät 14 nahezu spielfrei in die jeweilige Öffnung 37 eingreift und lagegesichert ist. In besonderer Weise kann die Stütze 34 einen Hartgummiblock aufweisen, in den die Öffnung 37 eingearbeitet ist. Die formschlüssige Verbindung des Zapfens 85 mit der Öffnung 37 fängt Torsionsbewegungen des Arbeitsgeräts 14 gegenüber dem Fahrzeugrahmen 12 auf und reduziert auf diese Weise Relativbewegungen und Schwingungen zwischen diesen.

Der Querschnitt und die Ausrichtung der Holme 72, 74 sind so gewählt, daß jeder Holm 72, 74 in der ihm zugeordneten Schiene 20, 22 gleitend aufgenommen werden kann.

An der Unterseite jedes Holms 72, 74 ist ein Ausschnitt 86 vorgesehen, der der Aufnahme einer in der Längsrichtung der Holme 72, 74 ausgerichteten Zahnstange 88 dient. Die Länge der Zahnstange 88 richtet sich nach dem Verstellweg des Geräterahmens 66.

Im rückwärtigen Bereich des rechten Holms 74 ist eine Bohrung 90 vorgesehen, die der Aufnahme einer Schraube 100 dient, mit der ein Motor 94 an dem Holm 74 befestigt wird. Ein ebenfalls in diesem Bereich vorgesehener Halter 92 kann für die Befestigung eines Ventils oder dergleichen zum Steuern des Motors 94 verwendet werden.

Der Träger 76 ist in der Form einer Platte ausgebildet, die an die beiden Montageplatten 82 angeschraubt wird und mit einer Vielzahl von Öffnungen versehen ist, die dem Anschluß der Tragarme 78, 80 dienen. Allerdings könnten die Holme 72, 74 und der Träger 76 auch miteinander verschweißt werden.

Der vordere Tragarm 78 erstreckt sich von dem Träger 76 ausgehend nach vorne, um in den Lagern 70 die beiden vorderen, äußeren Geräteeinheiten 64 aufzunehmen.

Der rückwärtige Tragarm 80 erstreckt sich von dem Träger 76 aus nach hinten in den Freiraum zwischen den beiden Rädern 18, um die mittlere Geräteeinheit 64 zu tragen.

Beide Tragarme 78, 80 können sowohl starr als auch vertikal beweglich an dem Träger 76 angreifen oder die Geräteeinheiten 64 vertikal beweglich aufnehmen, um Bodenunebenheiten ausgleichen zu können. Im übrigen erfolgt die Aufhängung der Geräteeinheiten 64 in bekannter Weise.

Ein nicht gezeigter Sensor ist an den Schienen 22 vorgesehen und erzeugt ein Signal abhängig davon, ob die Holme 72, 74 in die Schienen 20, 22 eingeschoben sind oder nicht. Allerdings reicht es aus, wenn nur die Bewegung eines Holms 72 oder 74 gegenüber einer Schiene 20 oder 22 festgestellt wird. Der Sensor kann auch an einer anderen Stelle, z. B. an dem Träger 76 angebracht werden.

Der Motor 94 ist in der Form eines hydraulischen Zylinder- und Kolbenzusammenbaus ausgebildet und mittels eines nicht gezeigten hydraulischen Steuerkreises betätigbar. Der Motor 94 ist doppelseitig beaufschlagbar, kann also in beiden Richtungen aktiv verstellt werden. Einenends ist der Motor 94 auf dem Bolzen 38 und anderenends mittels des Bolzens 100 auf dem Holm 74 gehalten. Die Befestigung des Motors 94 auf den Bolzen 38, 100 erfolgt möglichst nahe an der Seitenfläche 30, um die Biegemomente gering zu halten. Anstatt des hydraulischen Motors 94 könnte auch ein Pneumatik- oder Elektromotor verwendet werden. Schließlich könnten auch ein mechanisches Gestänge, mechanische Hebel oder ein Seilzug anstelle des Motors 94 verwendet werden.

Der Sensor ist mit dem nicht gezeigten Antrieb der Geräteeinheiten 64, mit der Hubvorrichtung 68 und einem nicht gezeigten Schwenkmotor für die äußeren Geräteeinheiten 64 tatsächlich oder logisch derart verknüpft, daß diese nicht betätigt werden können, wenn der Sensor anzeigt, daß sich der Geräterahmen 66 nicht mehr in der eingefahrenen Stellung befindet. Eine weitere Verbindung des Sensors kann zu dem Motor 94 und einem nicht gezeigten Saftey Interlock System hergestellt werden.

Es ist zwar nicht erforderlich, daß jeder dieser Antriebe unterbrochen wird; zur Sicherheit sollte jedoch der Antrieb der Geräteeinheiten 64 nicht mehr möglich sein.

Ausgehend von der bisherigen Beschreibung ergibt sich folgender Aufbau und Funktion.

Die Schienen 20, 22 und die Platte 48 sind als Teil des Fahrzeugrahmens 12 fester Bestandteil des Grundstückspflege-fahrzeugs 10 und bereits in der richtigen Lage montiert.

Der Geräterahmen 66 wird zu der U-Form zusammengebaut, was die Zahnstangen 88 einschließt, nicht jedoch den Bolzen 100 und den Halter 92. Anschließend wird der Geräterahmen 66 mit seinen Holmen 72, 74 in die Hohlräume der Schienen 20, 22 eingeschoben, und zwar derart, daß sie mit ihrer Unterseite auf der vorderen Stützrolle 52 und mit ihrer Oberseite an der rückwärtigen Stützrolle 52 anliegen, wodurch sich eine Wälzlagerung anstatt einer Gleitlagerung ergibt. Die Anlage mit der Unter- und der Oberseite ergibt sich von selbst aus den Hebelverhältnissen, die beim Einschieben der Holme 72, 74 herrschen. Sobald die Holme 72, 74 bis in den Verstellbereich innerhalb der Schienen 20, 22 eingeschoben sind, greifen die Räder 62 in die Zahnstangen 88 kämmend ein und stellen ab diesem Moment bei der weiteren Einschubbewegung eine synchrone Bewegung beider Holme 72, 74 sicher, so daß es nicht zu einem Verkanten kommen kann. Sobald die Holme 72, 44 vollkommen in die Schienen 20, 22 eingeschoben sind, wird der Bolzen 100 durch den Längsschlitz 28 gesteckt und an die Innenseite des rechten Holms 74 angeschraubt. Schließlich wird der auf seine größte Länge gebrachte Motor 94 auf den beiden Bolzen 38, 100 gesichert und an das nicht gezeigte Hydrauliksystem angeschlossen.

In diesem eingeschobenen Zustand ist der Sensor betätigt und die Auflager 84 sitzen auf den Stützen 34 auf, um die Holme 72, 74 in ihrer Auflage auf den Stützrollen 52 und in den Schienen 20, 22 zu entlasten.

Schließlich werden die Tragarme 78, 80 einzeln oder in einer Anbaukonsole zusammengefaßt, und die Geräteeinheiten 64 an den Träger 76 angebracht und mit dem entsprechenden Antrieb verbunden.

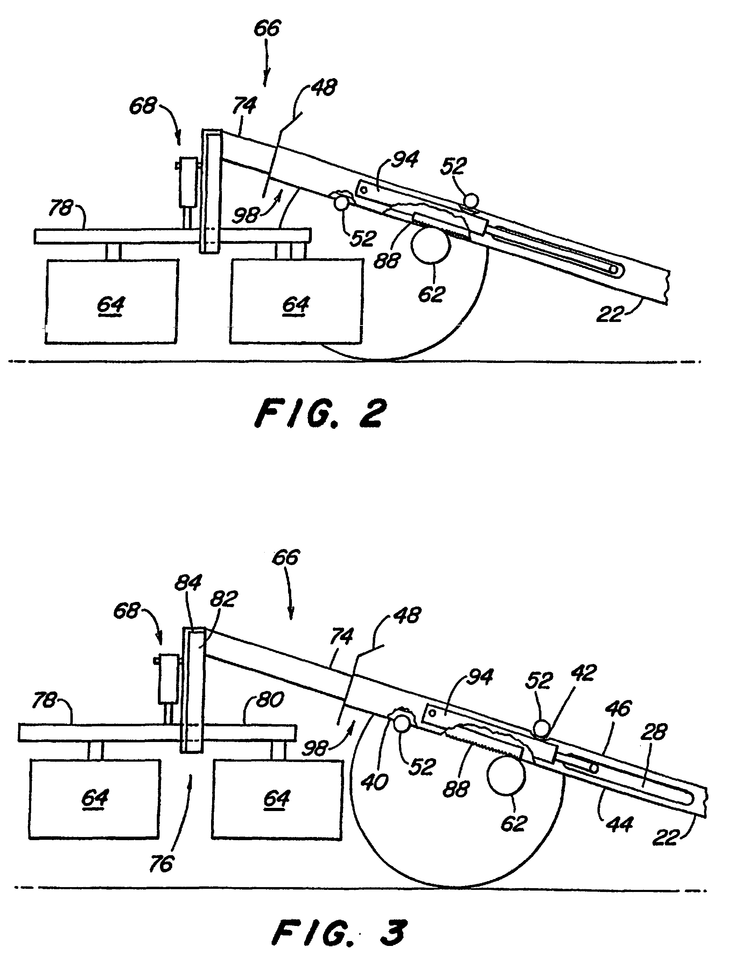

Die Figuren 1 und 2 stellen das Grundstückspflegefahrzeug 10 mit einem Arbeitsgerät 14 dar, dessen Geräterahmen 66 vollkommen in den Fahrzeugrahmen 12 bzw. dessen Schienen 20, 22 eingeschoben ist. In dieser Stellung berühren die Geräteeinheiten 64 beinahe den Boden und können auf diesen mittels der wenigstens einen Hubvorrichtung 68 abgesenkt werden; die mittlere Geräteeinheit 64 befindet sich zwischen den Rädern 18 und somit innerhalb einer Kontur 98 des Grundstückspflegefahrzeugs 10, die z. B. von der Platte 26, der Vorderkante der Räder 18 oder einem Aufbau des Grundstückspflegefahrzeugs 10 gebildet wird und sehr unregelmäßig verlaufen kann.

Zum Ausfahren des Geräterahmens 66 wird der Motor 94 zusammengezogen und bewegt somit die Holme 72, 74 innerhalb der Schienen 20, 22 derart, daß sich das Arbeitsgerät 14 aus seiner dem Grundstückspflegefahrzeug 10 zugelegenen in eine diesem abgelegene Stellung begibt, d. h., das Arbeitsgerät 14 tritt mit seiner Geräteeinheit 64 aus der Kontur 98 des Grundstückspflegefahrzeugs 10 heraus und kann gewartet werden. Die Verbindung der linken Zahnstange 88 mit dem linken Rad 62 über die Welle 60 mit dem rechten Rad 62 und der rechten Zahnstange 88 stellt einen Synchronlauf beider Holme 72, 74 sicher.

Es ist ersichtlich, daß anstatt der Zahnstangen 88, Räder 62 und der Welle 60 auch ein zweiter Motor 94, Längsschlitz 28, und Bolzen 38, 100 verwendet werden könnten, wobei die Motoren 94 z. B. mittels eines Strömungsmengenteilers synchron betrieben werden müßten.

In Figur 3 ist der Geräterahmen 66 in seiner ausgefahrenen Stellung gezeigt, in der die mittlere Geräteeinheit 64 aus dem Bereich zwischen den Rädern 18 herausgezogen und in eine Stellung gebracht worden ist, in der sie für Wartungszwecke gut zugänglich ist. Wenn die schräge Anordnung der Schienen 20, 22 auch nicht erforderlich ist, so erbringt sie doch den bedeutenden Vorteil, daß die Geräteeinheiten 64 in der ausgefahrenen Stellung noch weiter als sonst von dem Boden abgehoben sind, was einer Wartungsperson die Arbeit noch erleichtert.

Nachdem der Sensor nicht mehr betätigt ist, kann in der ausgefahrenen Stellung zur Sicherheit der Wartungsperson kein Antrieb mehr betätigt werden.

## Patentansprüche

1. Grundstückspflegefahrzeug (10) mit einem Arbeitsgerät (14), insbesondere selbstfahrender Rasenmäher, wobei das Arbeitsgerät (14) an einem Fahrzeugrahmen (12) in der Fahrzeuglängs- oder Querrichtung beweglich getragen und von einer wenigstens teilweise innerhalb der Kontur (98) des Grundstückspflegefahrzeugs (10) gelegenen Arbeitsstellung in eine außerhalb der Kontur (98) des Grundstückspflegefahrzeugs (10) gelegene Stellung bringbar ist, **dadurch gekennzeichnet, daß** das Arbeitsgerät (14) einen Geräterahmen (66) mit wenigstens einem sich in der Bewegungsrichtung erstreckenden Holm (72, 74) aufweist, der von wenigstens einer entsprechend geformten Schiene (20, 22) des Fahrzeugrahmens (12) beweglich aufgenommen wird.

2. Grundstückspflegefahrzeug nach Anspruch 1, **dadurch gekennzeichnet, daß** der Fahrzeugrahmen (12) das Arbeitsgerät (14) mit einer Neigung zu seiner Aufstandsfläche beweglich aufnimmt.

3. Grundstückspflegefahrzeug nach einem oder mehreren der vorherigen Ansprüche, **dadurch gekennzeichnet, daß** das Arbeitsgerät (14) mehrere in der Bewegungsrichtung zueinander versetzte Geräteeinheiten (64) aufweist.

4. Grundstückspflegefahrzeug nach einem oder mehreren der vorherigen Ansprüche, **dadurch gekennzeichnet, daß** die Bewegung des Arbeitsgeräts (14) mittels eines insbesondere hydraulischen Motors (94) erfolgt, der einerseits an dem Grundstückspflegefahrzeug (10), insbesondere an dem Fahrzeugrahmen (12), und andererseits an dem Arbeitsgerät (14), insbesondere an dem Geräterahmen (66), angreift.

5. Grundstückspflegefahrzeug nach einem oder mehreren der vorherigen Ansprüche, **dadurch gekennzeichnet, daß** jeder Holm (72, 74) in einer Schiene (20, 22) teleskopisch gelagert ist und wenigstens eine Schiene (20, 22) einen Längsschlitz (28) aufweist, durch den der Motor (94) an dem Holm (74) angeschlossen ist.

6. Grundstückspflegefahrzeug nach einem oder mehreren der vorherigen Ansprüche, **dadurch gekennzeichnet, daß** mehrere Holme (72, 74) mittels einer an ihnen angreifenden Welle (60) und Rädern (62) untereinander zum Synchronlauf verbunden sind.

7. Grundstückspflegefahrzeug nach Anspruch 6, **dadurch gekennzeichnet, daß** die Räder (62) als Zahnräder ausgebildet sind und in Zahnstangen (88) an den Holmen (72, 74) eingreifen.

8. Grundstückspflegefahrzeug nach einem oder mehreren der vorherigen Ansprüche, **dadurch gekennzeichnet, daß** der Geräterahmen (66) wenigstens ein Auflager (84) aufweist, das im eingefahrenen Zustand des Arbeitsgeräts (14) auf einer Stütze (34) an dem Fahrzeugrahmen (12) aufsitzt.

9. Grundstückspflegefahrzeug nach einem oder mehreren der vorherigen Ansprüche, **dadurch gekennzeichnet, daß** das Arbeitsgerät (14) mittels eines Arbeitsantriebs antreibbar ist und/oder ein oder mehrere Geräteeinheiten (64) mittels eines Schwenkmotors vorzugsweise vertikal in eine Außerbetriebsstellung schwenkbar sind und/oder ein oder mehrere Geräteeinheiten (64) mittels wenigstens einer Hubvorrichtung (68) gegenüber der Aufstandsfläche des Grundstückspflegefahrzeugs (10) verstellbar sind, und daß ein Sensor zur Erkennung der Lage des Arbeitsgeräts (14) gegenüber dem Grundstückspflegefahrzeug 10 vorhanden und derart verknüpft ist, daß der Antrieb des Arbeitsantriebs und/oder des Schwenkmotors und/oder der Hubvorrichtung (68) und/oder der Antrieb des Arbeitsgeräts (14) unterbrochen ist, wenn das Arbeitsgerät (14) nicht seine dem Grundstückspflegefahrzeug (10) zugelegene Stellung einnimmt.

10. Grundstückspflegefahrzeug nach einem oder mehreren der vorherigen Ansprüche, **dadurch gekennzeichnet, daß** das Arbeitsgerät (14) drei als Spindelmäher ausgebildete Geräteeinheiten (64) aufweist, die sich überdeckend an dem Geräterahmen (66) beweglich gehalten sind und wobei äußere Geräteeinheiten (64) in eine Außerbetriebsstellung vertikal schwenkbar sind.

11. Grundstückspflegefahrzeug nach einem oder mehreren der vorherigen Ansprüche, **dadurch gekennzeichnet, daß** der Holm (72, 74) zwischen wenigstens einer unteren und einer oberen Stützrolle (52) beweglich von der Schiene (20, 22) getragen wird.

## Claims

1. A plot care vehicle (10) with a working implement (14), especially a self-propelled lawnmower, wherein the working implement (14) is carried movably in the vehicle longitudinal or transverse direction on a vehicle frame (12) and can be brought from a working position disposed at least partially within the contour (98) of the plot care vehicle (10) into a position disposed outside the contour (98) of the plot care vehicle (10), **characterized in that** the working implement (14) comprises an implement frame (66) with at least one beam (72, 74) extending in the direction of movement, which is received movable by at least one correspondingly formed rail (20, 22) of the vehicle frame (12).

2. A plot care vehicle according to claim 1, **characterized in that** the vehicle frame (12) receives the working implement (14) movably with an inclination to its standing surface.

3. A plot care vehicle according to one or more of the preceding claims, **characterized in that** the working implement (14) comprises a plurality of implement units (64) offset relative to one another in the direction of movement.

4. A plot care vehicle according to one or more of the preceding claims, **characterized in that** the movement of the working implement (14) is effected by means of a motor (94), especially a hydraulic motor, which engages at one end on the plot care vehicle (10), especially on the vehicle frame (12), and at the other end on the working implement (14), especially on the implement frame (66).

5. A plot care vehicle according to one or more of the preceding claims, **characterized in that** each beam (72, 74) is telescopically mounted in a rail (20, 22) and at least one rail (20, 22) has a slot (28) through which the motor (94) is connected to the beam (74).

6. A plot care vehicle according to one or more of the preceding claims, **characterized in that** a plurality of beams (72, 74) are coupled together by means of a shaft (60) and wheels (62) engaging thereon for synchronous running.

7. A plot care vehicle according to claim 6, **characterized in that** the wheels (62) are in the form of gearwheels and engage in racks (88) on the beams (72, 74).

8. A plot care vehicle according to one or more of the preceding claims, **characterized in that** the implement frame (66) has at least one rest (84) which bears on a support (34) on the vehicle frame (12) in the retracted state of the working implement (14).

9. A plot care vehicle according to one or more of the preceding claims, **characterized in that** the working implement (14) can be driven by a working drive and/or one or more implement units (64) can be pivoted preferably vertically into an inoperative position by means of a tilt motor and/or one or more implement units (64) can be adjusted relative to the standing surface of the plot care vehicle (10) by means of at least one lift device (68), and **in that** a sensor is provided for detecting the position of the working implement (14) relative to the plot care vehicle (10) and is so connected that the drive of the working drive and/or of the tilt motor and/or of the lift device (68) and/or of the working implement (14) is interrupted when the working implement (14) is not present in its position approached to the plot care vehicle (10).

10. A plot care vehicle according to one or more of the preceding claims, **characterized in that** the working implement (14) comprises three implement units (64) in the form of cylinder mowers, which are movably held, overlapping, on the implement frame (66) and wherein outer implement units (64) can be pivoted vertically into an inoperative position.

11. A plot care vehicle according to one or more of the preceding claims, **characterized in that** the beam (72, 74) is carried movably by the rail (20, 22) between at least one lower and one upper support roller (52).

## Revendications

1. Véhicule (10) d'entretien du sol comportant un outil de travail (14), notamment une tondeuse autotractée, l'outil de travail (14) étant porté par un châssis (12) du véhicule, de manière à être mobile dans la direction longitudinale ou dans la direction transversale du véhicule et pouvant être amené depuis une position de travail, située au moins en partie à l'intérieur du contour (98) du véhicule (10) d'entretien du sol, dans une position située à l'extérieur du contour (98) du véhicule (10) d'entretien du sol, **caractérisé en ce que** l'outil de travail (14) possède un châssis (66) comportant un longeron (72, 74) qui s'étend au moins dans la direction de déplacement et qui est reçu, de manière à être mobile, par au moins un rail conformé de façon correspondante (20, 22) du châssis (12) du véhicule.

2. Véhicule d'entretien du sol selon la revendication 1, **caractérisé en ce que** le châssis (12) du véhicule loge l'outil de travail (14) de manière qu'il soit mobile, avec une inclinaison par rapport à sa surface d'appui.

3. Véhicule d'entretien du sol selon une ou plusieurs des revendications précédentes, **caractérisé en ce que** l'outil de travail (14) comporte plusieurs unités (64) décalées les unes par rapport aux autres dans la direction de déplacement.

4. Véhicule d'entretien du sol selon une ou plusieurs des revendications précédentes, **caractérisé en ce que** le déplacement de l'outil de travail (14) s'effectue à l'aide d'un moteur (94), notamment hydraulique, qui est raccordé d'une part au véhicule (10) d'entretien du sol, notamment au châssis (12) du véhicule, et d'autre part à l'outil de travail (14), notamment au châssis (66) de l'outil.

5. Véhicule d'entretien du sol selon une ou plusieurs des revendications précédentes, **caractérisé en ce que caractérisé en ce que** chaque longeron (72, 74) est monté de façon télescopique dans un rail (20, 22) et au moins un rail (20, 22) comporte une fente longitudinale (28), par laquelle le moteur (94) est raccordé au longeron (74).

6. Véhicule d'entretien du sol selon une ou plusieurs des revendications précédentes, **caractérisé en ce que** plusieurs longerons (72, 74) sont reliées entre eux pour un fonctionnement synchrone, à l'aide d'au moins un arbre (60), qui attaque ces longerons, et de roues (62).

7. Véhicule d'entretien du sol selon la revendication 6, **caractérisé en ce que** les roues (62) sont agencées sous la forme de roues dentées et engrènent dans des crémaillères (88) présentes sur les longerons (72, 74).

8. Véhicule d'entretien du sol selon une ou plusieurs des revendications précédentes, **caractérisé en ce que** le châssis (66) de l'outil comporte au moins un appui (84) qui, lorsque l'outil de travail (14) est à l'état rétracté, repose sur un support (34) sur le châssis (12) du véhicule.

9. Véhicule d'entretien du sol selon une ou plusieurs des revendications précédentes, **caractérisé en ce que** l'outil de travail (14) peut être entraîné au moyen d'un dispositif d'entraînement de travail et/ou qu'une ou de plusieurs unités (64) de l'outil peuvent pivoter de préférence verticalement pour être amenées dans une position de non fonctionnement à l'aide d'un moteur de pivotement et/ou qu'une ou plusieurs unités (64) de l'outil peuvent être réglées à l'aide d'au moins un dispositif de levage (68) par rapport à la surface d'appui du véhicule (10) d'entretien du sol, qu'un capteur pour identifier la position de l'outil de travail (14) par rapport au véhicule (10) d'entretien du sol est présent et est combiné de telle sorte que l'entraînement du dispositif d'entraînement de travail et/ou du moteur de pivotement et/ou du dispositif de levage (68) et/ou l'entraînement de l'outil de travail (14) sont interrompus lorsque l'outil de travail (14) ne vient pas dans sa position appliquée contre le véhicule (10) d'entretien du sol.

10. Véhicule d'entretien du sol selon une ou plusieurs des revendications précédentes, **caractérisé en ce que** l'outil de travail (14) comporte trois unités (64) agencées sous la forme de tondeuses à entraînement par roues latérales, et qui sont retenues de manière à être mobiles, en chevauchement sur le châssis (66) de l'outil, et que des unités extérieures (64) de l'outil pouvant pivoter verticalement pour venir dans une position hors service.

11. Véhicule d'entretien du sol selon une ou plusieurs des revendications précédentes, **caractérisé en ce que** le longeron (72, 74) est supporté par le rail (20, 22) de manière à être mobile entre au moins un rouleau d'appui inférieur et un rouleau d'appui supérieur (52).
